# DEMANDE DE BREVET EUROPEEN

(11) **EP 1 562 342 A1**
(43) Date de publication de la demande: **10.08.2005**
(21) Numéro de dépôt: 04290303.9
(22) Date de dépôt: 05.02.2004
(51) Int. Cl.: H04L 29/06, H04Q 7/22

(54) **Procédé et système de traitement d'un message multimédia**

(71) Demandeur: FRANCE TELECOM, 75015 Paris (FR)
(72) Inventeur: Bellordre, Philippe, 75015 Paris (FR); Potier, Aline, 92160 Antony (FR)
(74) Mandataire: Fréchède, Michel

(57) **Abrégé**

L'invention concerne un procédé de traitement d'un message multimédia envoyé par un terminal de télécommunication (2) d'un correspondant à un terminal de télécommunication d'un utilisateur destinataire (10), ledit message comprenant au moins un élément d'identification du terminal destinataire et au moins un objet multimédia de type audio ou vidéo. Ce procédé comprend les étapes suivantes:
- extraction (76) dudit objet audio ou vidéo dudit message multimédia;
- stockage (86) dudit objet dans des moyens de stockage (58);
- création (87) d'une adresse de localisation du lieu de stockage dudit objet audio ou vidéo dans lesdits moyens de stockage; et
- insertion (90) de ladite adresse de localisation dans le message multimédia en remplacement dudit objet audio ou vidéo pour constituer un message multimédia de substitution.

L'invention concerne également un système de traitement d'un message multimédia.

## Description

L'invention concerne un procédé de traitement d'un message multimédia et un système de traitement correspondant.

La lecture en transit est une technologie de transfert de données sous forme de flux régulier et continu. Elle permet de diffuser des objets multimédias de type audio ou vidéo sur un réseau fixe filaire ou non et/ou sur un réseau mobile en temps réel. Pour utiliser cette technologie sur un réseau mobile, un utilisateur muni d'un terminal de télécommunication comportant un module client de lecture en transit peut se connecter à un site WAP, choisir une vidéo stockée dans un serveur de lecture en transit et demande à ce que cette vidéo lui soit envoyée dans un mode de lecture en transit.

Cependant, cette technologie ne permet pas à un utilisateur de recevoir d'autres informations contextuelles telles que, par exemple une image ou du texte, simultanément à l'objet audio ou vidéo.

Un service de messagerie multimédia permet aux abonnés d'envoyer et de recevoir des messages multimédias depuis et vers un terminal de télécommunication mobile comportant un module client MMS. Les messages multimédias contiennent des objets de type texte et/ou des objets de type images, et/ou des objets de type son, et/ou des objets de type vidéo. Le service de messagerie multimédia peut être déployé sur un réseau mobile, par exemple GSM, GPRS ou UMTS, ou sur un réseau fixe filaire ou non. Les messages multimédias réceptionnés par un terminal de télécommunication sont stockés dans sa mémoire. Puis, sur demande de l'utilisateur, ils sont visualisés par celui-ci à l'aide d'un afficheur-joueur.

Cependant, comme les terminaux de télécommunication ont une capacité mémoire limitée, il n'est pas possible de leur envoyer des messages multimédias de taille importante.

L'invention a pour but de permettre à des terminaux de télécommunication de faciliter les échanges de messages multimédias de taille importante.

A cet effet, l'invention a pour objet un procédé de traitement d'un message multimédia, caractérisé en ce qu'il comporte les étapes suivantes :
- extraction dudit objet audio ou vidéo dudit message multimédia ;
- stockage dudit objet dans des moyens de stockage d'objets multimédias ;
- création d'une adresse de localisation du lieu de stockage dudit objet audio ou vidéo dans lesdits moyens de stockage d'objets multimédias ; et
- insertion de ladite adresse de localisation dans le message multimédia en remplacement dudit objet audio ou vidéo pour constituer un message multimédia de substitution.

Suivant des modes particuliers de réalisation, le procédé de traitement comporte une ou plusieurs des caractéristiques suivantes :
- le procédé comprend en outre une étape préalable de recherche d'une information d'autorisation de traitement dudit message, à partir de l'élément d'identification du terminal destinataire, dans des moyens de stockage d'informations, ladite information d'autorisation définissant si le terminal destinataire est abonné au procédé de traitement ;
- le procédé comprend en outre les étapes suivantes :
   - extraction à partir dudit objet audio ou vidéo, d'une séquence représentative de l'objet de type audio ou vidéo, et
   - insertion de ladite séquence dans le message multimédia de substitution constitué ;
- l'étape de stockage de l'objet audio ou vidéo est précédée par une étape de traitement de l'objet comprenant les étapes suivantes :
   - recherche d'informations définissant les caractéristiques techniques du terminal destinataire dans les moyens de stockage d'informations, et
   - modification dudit objet audio ou vidéo pour adapter sa forme aux caractéristiques techniques du terminal destinataire ;
- le procédé comprend en outre les étapes suivantes :
   - recherche dans le message multimédia d'un objet de type audio ou vidéo, et
   - envoi du message multimédia au terminal destinataire en l'absence d'objet de type audio ou vidéo dans le message multimédia ;
- le procédé comprend les étapes suivantes :
   - génération d'un code de description du contenu du message multimédia de substitution, et
   - remplacement du code de description du message multimédia par le code de description du message multimédia de substitution ;

L'invention a également pour objet un système de traitement d'un message multimédia, caractérisé en ce qu'il comporte :
- des moyens d'insertion / extraction aptes à extraire chaque objet audio ou vidéo dudit message multimédia, et
- des moyens de substitution d'une adresse de localisation du lieu de stockage de l'objet audio ou vidéo à chaque objet audio ou vidéo, les moyens de substitution comprenant :
   - des moyens de stockage d'objets multimédias aptes à stocker chaque objet audio ou vidéo, et
   - des moyens de création d'une adresse de localisation du lieu de stockage de chaque objet audio ou vidéo dans les moyens de stockage,
- lesdits moyens d'insertion / d'extraction étant aptes à insérer ladite adresse de localisation dans le message multimédia en remplacement dudit objet audio ou vidéo pour générer un message de substitution.

Suivant des modes particuliers, le système comporte une ou plusieurs des caractéristiques suivantes :
- les moyens de substitution sont implantés dans un serveur de lecture en transit et les moyens d'insertion / d'extraction sont implantés dans un serveur applicatif (6) de traitement ; et
- les moyens d'insertion / extraction et les moyens de substitution sont implantés dans un serveur applicatif de traitement.

L'invention a également pour objet un support d'enregistrement comprenant un programme d'ordinateur comportant des instructions pour l'exécution des étapes du procédé de traitement d'un message multimédia, lorsque le programme est exécuté sur un ordinateur.

L'invention sera mieux comprise à la lecture de la description qui va suivre, donnée uniquement à titre d'exemple et faite en se référant aux dessins sur lesquels :
- la figure 1 est un schéma bloc fonctionnel représentant un exemple de structure d'un système de traitement d'un message multimédia suivant l'invention ;
- la figure 2 est un diagramme représentatif des étapes d'un procédé de traitement d'un message multimédia selon l'invention ;
- la figure 3 est un schéma bloc représentant un exemple d'un message multimédia connu ; et
- la figure 4 est un schéma bloc représentant le message multimédia de la figure 3 traité par le procédé de traitement selon l'invention.

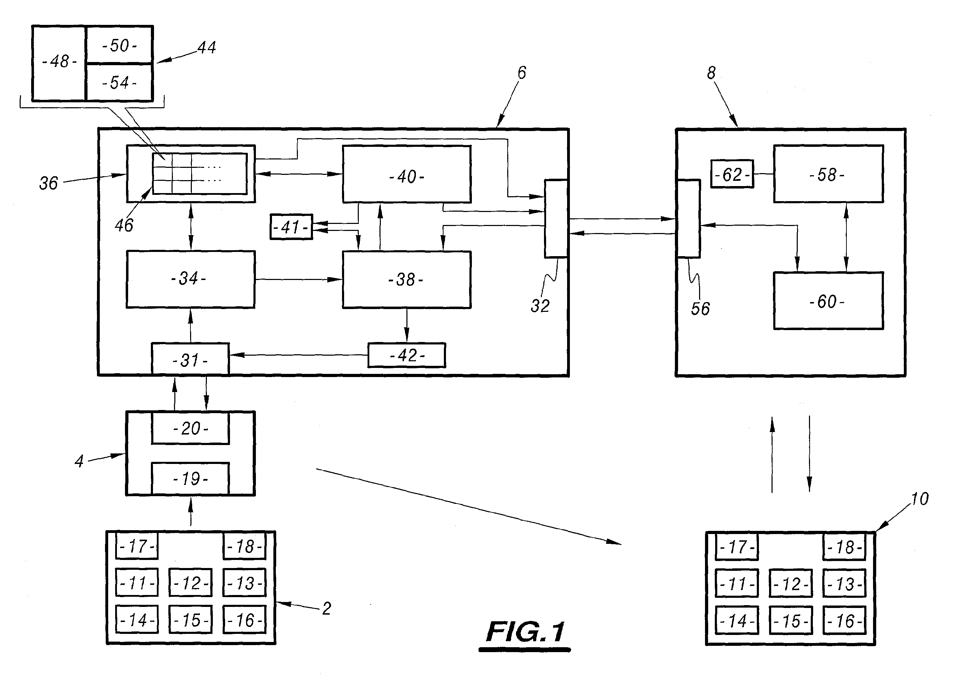

Un exemple de structure d'un système de traitement d'un message multimédia selon l'invention est illustré schématiquement sur la figure 1. Dans cet exemple, le correspondant envoyant un message multimédia et le destinataire du message sont abonnés auprès du même opérateur.

Ce système de traitement d'un message comporte un terminal 2 de télécommunication d'un correspondant envoyant un message multimédia, un serveur de messagerie multimédia 4, un serveur applicatif 6, un serveur de lecture en transit 8 et un terminal de télécommunication 10 d'un utilisateur destinataire du message multimédia envoyé par le terminal 2.

Les terminaux de communication 2 et 10 sont connus en soi et ne seront pas décrits de manière détaillée. Ils comprennent notamment un module client multimédia 11, un éditeur SMIL 12, une mémoire 13, une interface homme/machine 14, des opérateurs de traitement 15 d'objets multimédias, un module client de lecture en transit 16, une interface 17 avec le serveur de messagerie multimédia 4, par exemple de type MM1, et une interface de communication 18 avec un réseau par commutation de paquets usuellement appelé réseau Internet.

Le serveur de messagerie multimédia 4 est connu en soi et ne sera pas décrit de manière détaillée. Il comprend notamment une interface 19 de communication avec les terminaux mobiles 2 et 10, par exemple de type MM1 et une interface 20 de communication avec le serveur applicatif 6, par exemple de type MM7.

Selon l'invention, le serveur multimédia 4 est apte à transmettre les messages multimédias envoyés par les terminaux 2 des correspondants appelants au serveur applicatif 6 et à transmettre en retour aux terminaux destinataires de télécommunication 10, sous certaines conditions, des messages multimédias de substitution envoyés par le serveur applicatif 6.

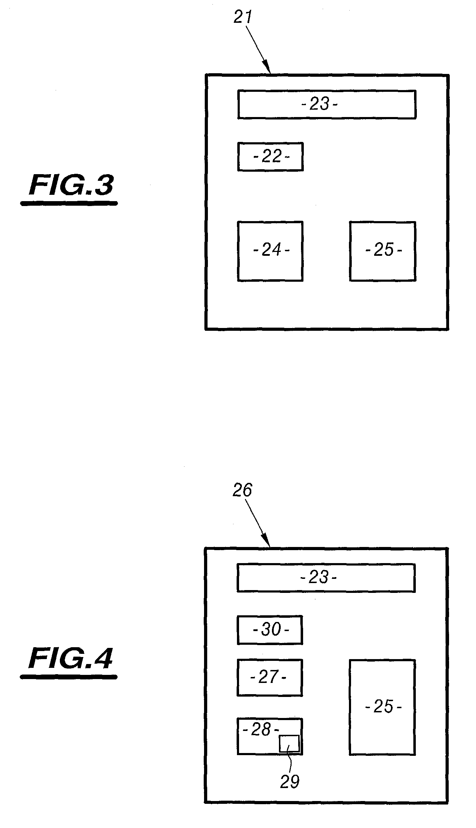

La figure 3 représente un exemple d'un message multimédia 21. Ce message 21 comprend un code de description SMIL 22 du contenu du message 21, un élément d'identification 23 du terminal destinataire 10 tel que le numéro de téléphone de celui-ci, un objet de type audio ou vidéo 24 et un objet de type texte 25 et au moins un ou plusieurs objets images.

La figure 4 représente un exemple d'un message multimédia de substitution 26 généré par le système de traitement de message selon l'invention à partir du message 21 représenté sur la figure 3. Ce message de substitution 26 comprend outre l'élément d'identification 23, l'objet texte 25 et/ou les objets images, une séquence 27 et un fichier de définition SDP 28 en remplacement de l'objet audio ou vidéo 24 ainsi qu'un nouveau code de description SMIL 30 du contenu du message de substitution.

La séquence 27 est un objet comportant un ou plusieurs extraits représentatifs de l'objet audio ou vidéo. Cette séquence contient par exemple une ou plusieurs images d'une vidéo (GIF animée) ou un court morceau de musique.

Le fichier de définition SDP 28 est relatif à l'objet audio ou vidéo et à son lieu de stockage. Il comprend notamment une adresse hyperlien URL 29 de localisation du lieu de stockage de cet objet. Le fichier de définition 28 apparaît uniquement sous la forme de l'hyperlien 29 dans le message de substitution 60. Les autres informations du fichier SDP 28 sont non visibles pour l'utilisateur destinataire.

Le serveur applicatif 6 comprend une interface 31 de communication avec le serveur multimédia 4, par exemple de type MM7, une interface 32 de communication avec le serveur de lecture en transit 8 utilisant par exemple les protocoles de communication SOAP et XML, un frontal de vérification 34, des moyens de stockage de données 36, un module d'extraction / insertion 38, un module de traitement audiovisuel 40, une mémoire de stockage temporaire 41 et un éditeur SMIL 42.

Le frontal de vérification 34 est apte à recevoir le message multimédia 21 transmis par le serveur 4 et à rechercher dans ce message 21, l'existence d'un objet multimédia de type audio ou vidéo.

Lorsque le message multimédia 21 ne comporte pas d'objet audio ou vidéo, le frontal de vérification 34 est adapté pour renvoyer le message au serveur 4 par l'intermédiaire des interfaces 20 et 31.

Lorsque le message 21 comprend un objet de type audio ou vidéo 24, le frontal de vérification 34 est apte à rechercher dans les moyens de stockage 36, une information d'autorisation 50 d'utilisation du procédé de traitement du message multimédia selon l'invention. Cette autorisation est accordée à tout utilisateur destinataire abonné à un service de traitement de message selon l'invention.

Lorsque l'utilisateur a souscrit un abonnement à ce service, le frontal de vérification 34 est apte à communiquer le message multimédia 21 au module d'extraction / insertion 38.

Les moyens de stockage de données 36 comprennent une base de données 46 dans laquelle des fichiers d'informations 44 sont enregistrés pour chaque destinataire abonné à l'opérateur du serveur multimédia 4. Chaque fichier 44 comprend des informations d'identification 48 du terminal 10 du destinataire, comme par exemple son numéro de téléphone ou son MSISDN, des informations d'abonnement 50 et des informations techniques 54 concernant le terminal 10 du destinataire abonné.

Les informations d'abonnement 50 indiquent si le message est autorisé ou non à être traité selon le procédé de l'invention. Cette autorisation est accordée à tout utilisateur d'un terminal abonné au service de traitement selon l'invention.

Les informations techniques 54 permettent d'adapter le format, le son et la taille des objets audio et vidéo aux caractéristiques techniques du terminal destinataire.

Le module d'extraction / insertion 38 est adapté pour extraire l'objet audio ou vidéo 24 contenu dans le message 21. Il est également apte à envoyer le message dépouillé des objets audio ou vidéo dans la mémoire de stockage temporaire 41 et à communiquer chaque objet audio ou vidéo extrait au module de traitement audiovisuel 40.

Le module d'extraction / insertion 38 est propre à constituer un message de substitution 26. Pour cela, il est apte à rechercher dans la mémoire 41, la séquence 27 et le message 21 à l'aide de l'élément d'identification 23 du terminal destinataire. De plus, il est adapté pour créer un message de substitution 26 à partir du message 21 en reprenant l'élément d'identification 23 et les objets multimédias 25 d'un type différent des objets de type audio ou vidéo et en insérant le fichier de définition 28 transmis par le serveur 8, en remplacement de l'objet audio ou vidéo 24.

De plus, il est également adapté pour insérer dans le nouveau message créé, la séquence 27 recherchée dans la mémoire de stockage 41.

Le module de traitement audiovisuel 40 est apte à rechercher les caractéristiques techniques 54 du terminal 10 dans les moyens de stockage 36 et à modifier les objets audio et les objets vidéo contenus dans le message 21 pour les adapter aux caractéristiques techniques du terminal 10.

Le traitement d'un objet vidéo consiste par exemple en une modification du format de sa séquence, de sa taille en pixels pour l'adapter à la taille de l'écran du terminal 10 ou encore en une réduction de sa taille en octets pour prendre en compte les caractéristiques de réception de l'objet. Après traitement, le module 40 est adapté pour transmettre l'objet audio ou vidéo traité au serveur de lecture en transit 8.

Le module de traitement 40 est également apte à analyser la vidéo ou l'objet audio et à en extraire une séquence 27 représentative de celui-ci. Dans le cas d'une vidéo, l'image représentative peut être la première image de la vidéo, soit l'image la plus significative de celui-ci. Dans ce dernier cas, le module de traitement analyse l'ensemble de la vidéo et en déduit l'image la plus représentative. Cette image est codée en un format d'image tel que le format JPEG par exemple.

Les moyens de stockage 41 sont propres à stocker le message multimédia 21 dépouillé des objets audio ou vidéo ainsi que la séquence 27 générée par le module 40. Ces éléments sont stockés de manière à ce qu'ils soient adressables à l'aide de l'élément d'identification 23 du terminal destinataire 10 du message.

L'éditeur SMIL 42 est apte à générer un fichier descriptif SMIL 30 du contenu du message multimédia de substitution et à remplacer le fichier descriptif SMIL 22 de contenu du message existant avant traitement par ce nouveau fichier descriptif SMIL 30.

L'éditeur 42 utilise le langage SMIL qui permet de générer dans des balises, un code pour chaque objet multimédia contenu d'un message et de synchroniser les objets multimédias. Une description du langage SMIL est disponible à l'adresse suivante : "Synchronized Multimedia Integration Language (SMIL) boston specification", W3C, working draft SMIL 2.0 07 August 2001 URL: http://www.w3c.org/TR/smil20/.

Cependant, un autre langage pourrait également être utilisé.

Le serveur de lecture en transit 8 comprend une interface de communication 56 utilisant par exemple le protocole SOAP ou XML, une mémoire 58 de stockage des objets audio et vidéo, des moyens de génération 60 d'un fichier de définition SDP 38 et un décodeur 62.

Les moyens de stockage 58 sont aptes à stocker les objets audio ou vidéo 24 à une adresse de localisation.

Les moyens de génération 60 d'un ficher de définition SDP 28 sont adaptés pour générer un fichier de définition relatif à l'objet audio ou vidéo 24, codé selon un protocole SDP.

Ce fichier 28 comprend au moins une adresse hyperlien 29 du lieu de localisation de l'objet audio ou vidéo 24 dans la mémoire de stockage 58 de type rtps =//... envoyé par le serveur applicatif. De plus, il peut comprendre également des informations sur l'objet audio ou vidéo 24 tel que par exemple son format ou des informations de connexion au serveur de lecture en transit 8.

Les informations de connexion incluent notamment l'identification de la session et de son créateur, la version du protocole à utiliser pour la connexion, le nom de la session, une description de l'hyperlien URI, une adresse électronique, le nom du média et son adresse de transport, des informations de bande passante et des attributs de lignes.

Les moyens de génération 60 sont aptes à envoyer au serveur applicatif 6 le fichier de définition SDP 28 généré.

Le décodeur 62 est apte à décoder et à décomprimer les objets audio et vidéo stockés dans les moyens 58 avant leur transfert en lecture en transit au terminal 10.

Le module client MMS 10, les interfaces de communication 17, 18, 31, 32, 56, le frontal de vérification 34, le module d'extraction/ insertion 38, le module de traitement audiovisuel 40, l'éditeur SMIL 42, les moyens de génération 60 et le décodeur 62 peuvent être implémentés sous forme matérielle sur un microcontrôleur ou sous forme logicielle sur un support de logicielle ou un composant programmé exécuté par un microprocesseur à partir d'une mémoire non volatile.

Selon un mode de réalisation de l'invention alternatif, les moyens de stockage 36 des données peuvent être implémentés dans un serveur de stockage indépendant. Dans ce cas, le module de traitement audiovisuel 40, le frontal de vérification 34 et les moyens de génération 60 sont aptes à interroger ce serveur par l'intermédiaire de l'interface de communication 32.

Alternativement également, les fichiers 44 de chaque abonné destinataire ne comportent que les informations d'identification 48 et d'abonnement 50. Dans ce cas, un autre serveur stocke dans une base de données, les informations techniques 54 concernant les terminaux destinataires abonnés et le module de traitement 40 est propre à interroger cette base de données.

Selon une variante de l'invention, le serveur applicatif 6 comprend des moyens de stockage 58 des objets audio et vidéo 24, des moyens de génération d'un fichier de définition SDP et un décodeur 62. Dans ce cas, le serveur applicatif 6 stocke les objets audio et vidéo et génère seul le fichier de définition SDP 28 sans l'intervention d'un serveur de lecture en transit 8.

Lorsque le correspondant appelant et le destinataire du message ne sont pas abonnés auprès du même opérateur, le message multimédia 22 est envoyé au serveur multimédia du correspondant appelant qui le transfère au serveur multimédia 4 de l'opérateur du destinataire du message pour traitement du message selon le procédé de l'invention décrit ci-dessus.

Les messages multimédias 21 générés par un serveur de contenu peuvent être traités par le système de traitement selon l'invention.

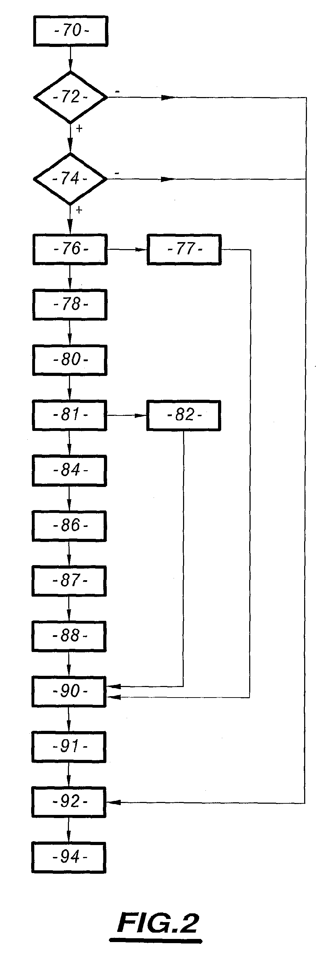

Le procédé de traitement d'un message multimédia selon l'invention est illustré sur la figure 2.

Au cours d'une étape 70 du procédé de traitement selon l'invention, le serveur de messagerie multimédia 4 adresse au serveur applicatif 6 un message multimédia 21.

Par exemple, le message multimédia 21 est adressé à l'adresse électronique: MSIDSN@streaming.com dans laquelle « MSIDSN » est l'élément d'identification 23 et correspond au numéro de téléphone du terminal 10 et « streaming.com » est l'adresse du serveur applicatif 6.

Selon une étape 72, le frontal de vérification 34 analyse le message 21 et recherche dans ce message un objet pouvant être envoyé en mode de lecture en transit tel qu'un objet audio ou vidéo 24.

Si le message ne comporte pas un tel objet, le frontal de vérification 34 renvoie le message multimédia 21 au serveur multimédia 4 au cours d'une étape 92.

Si au contraire, le message comprend un tel objet, le frontal de vérification 34 recherche dans la base de données 36 des abonnés destinataires si le terminal destinataire 10 est abonné au service de traitement selon l'invention, au cours d'une étape 74.

Pour cela, il interroge la base de données 44 et recherche un élément d'identification 48 correspondant à l'élément d'identification 23 contenu dans le message 21. Puis, il recherche une information d'abonnement 50 au procédé de traitement du message 21 selon l'invention.

Lorsque l'utilisateur du terminal destinataire 10 n'est pas abonné à ce service, le message multimédia 21 est renvoyé au serveur multimédia 4 au cours de l'étape 92.

Si par contre, le terminal destinataire 10 est autorisé à utiliser le procédé de traitement selon l'invention, le frontal 34 transmet le message 21 au module d'extraction / insertion 38.

Au cours d'une étape 76, le module d'extraction / insertion 38 extrait chaque objet audio ou vidéo 24 et transmet chaque objet audio ou vidéo extrait au module de traitement 40.

Au cours d'une étape 77, le module d'extraction / insertion 38 stocke le message 21 dépouillé des objets audio ou vidéo dans les moyens de stockage provisoire 41 de manière que celui-ci puisse être retrouvé à partir de l'élément d'identification 23 du terminal destinataire 10.

Au cours d'une étape 78, le module de traitement 40 interroge la base de données 44 des moyens de stockage 36 et recherche les informations techniques 54 concernant le terminal destinataire pour adapter l'objet audio ou vidéo aux caractéristiques techniques de celui-ci.

Au cours d'une étape 80, le module de traitement 40 détermine, à partir des informations techniques 54, si les objets audio ou vidéo 24 doivent être adaptés au terminal destinataire 10. Puis, si besoin, il va les modifier pour les adapter au terminal 10.

Au cours d'une étape 81, le module de traitement 40 analyse chaque objet audio ou vidéo 24 et en extrait une séquence 27 représentative de l'objet audio ou vidéo.

Au cours d'une étape 82, chaque séquence 27 est stockée dans les moyens de stockage provisoire 41 à la même adresse que le message 21 dépouillé des objets audio ou vidéo 24.

Puis, au cours d'une étape 84, le module de traitement 40 envoie au serveur de lecture en transit 8, par l'intermédiaire des interfaces de communication 32 et 56, chaque objet audio ou vidéo 24 traité pendant l'étape 80.

Au cours d'une étape 86, les moyens de génération 60 stockent l'objet audio ou vidéo 24 dans la mémoire 58 dans un lieu de stockage identifiable.

Au cours d'une étape 87, les moyens de génération 60 génèrent un fichier de définition 28 SDP comprenant l'adresse 29 de localisation du lieu de stockage de l'objet audio ou vidéo 24 et éventuellement les informations concernant l'objet 24 et des informations de connexion.

Au cours d'une étape 88, le fichier SDP 28 est envoyé au module d'extraction / insertion 38 du serveur applicatif 6 par l'intermédiaire des interfaces 32 et 56.

Au cours d'une étape 90, le module d'extraction / insertion 38 génère un nouveau message 26 multimédia de substitution.

Pour cela, il recherche à partir de l'élément d'identification 23, le message 21 stocké dans les moyens de stockage temporaire 41 au cours de l'étape 77. Il crée un nouveau message de substitution 26 qui reprend les valeurs des en-têtes du message originel 21 ainsi que les objets multimédias non traités par le procédé de l'invention tels que par exemple les objets de type texte 25 sans changer leur position dans le message. Il insère en lieu et place de l'objet audio ou vidéo 24 du message originel le fichier de définition SDP 28 envoyé par le serveur 8.

Par ailleurs, il insère la séquence 27 représentative de l'objet audio ou vidéo extraite au cours de l'étape 82 et stockée dans les moyens de stockage temporaire 41.

Puis, le module d'extraction / insertion 38 transmet le message de substitution à l'éditeur SMIL 42.

Au cours d'une étape 91, l'éditeur SMIL 42 génère un nouveau code de description 30 de l'ensemble des objets contenus dans le message de substitution 26 et notamment des objets séquence 27 et fichier de définition SDP 28. Ce code de description, en langage SMIL, remplace le code de description 22 du message originel 21.

A l'étape 92, le serveur applicatif 6 renvoie le message de substitution 26 au serveur 4 multimédia.

Enfin, à l'étape 94 le serveur multimédia 4 communique le message au terminal destinataire 10 au numéro de téléphone MISDN.

Lorsque le terminal destinataire reçoit le message de substitution 26, l'utilisateur destinataire peut, à l'aide de l'interface homme / machine 14, se connecter au réseau par commutation de paquet et rechercher à l'aide du module client de lecture en transit 16, l'objet audio ou vidéo 24 stocké dans la mémoire 58 du serveur 8 de lecture en transit.

Pour cela, le module client de lecture en transit 16 utilise le fichier de définition SDP inséré dans le message pendant le procédé de traitement selon l'invention.

A la réception de la requête de lecture en transit émise par le terminal destinataire 10, le serveur 8 transmet l'objet audio ou vidéo 24 au terminal 10, conformément à un mode de téléchargement 52 choisi par le serveur applicatif 6. Selon l'échantillonnage du contenu audiovisuel, le serveur applicatif est apte à choisir le mode de téléchargement approprié. Les modes de téléchargement progressif ou de lecture en transit classique peuvent, par exemple, être utilisés. La technique du téléchargement progressif consiste à télécharger au préalable le fichier audio ou vidéo ou une partie du fichier audio ou vidéo dans une mémoire tampon du terminal 10 avant de lire celui-ci. La technique de lecture en transit consiste à lire le fichier au fur et à mesure de son téléchargement sans enregistrement de celui-ci dans une mémoire.

Avantageusement, ce procédé permet d'éviter de saturer la mémoire d'un terminal de télécommunication.

## Revendications

1. Procédé de traitement d'un message multimédia envoyé par un terminal (2) de télécommunication d'un correspondant à un terminal (10) de télécommunication d'un utilisateur destinataire, ledit message (21) comprenant au moins un élément d'identification (23) du terminal destinataire (10) et au moins un objet multimédia de type audio ou vidéo (24), **caractérisé en ce qu'**il comprend les étapes suivantes :
- extraction (76) dudit objet audio ou vidéo (24) dudit message multimédia (21 ) ;
- stockage (86) dudit objet (24) dans des moyens (58) de stockage d'objets multimédias ;
- création (87) d'une adresse de localisation (29) du lieu de stockage dudit objet audio ou vidéo (24) dans lesdits moyens de stockage (58) d'objets multimédias ; et
- insertion (90) de ladite adresse de localisation (29) dans le message multimédia (21) en remplacement dudit objet audio ou vidéo (24) pour constituer un message multimédia (26) de substitution.

2. Procédé de traitement d'un message multimédia selon la revendication 1, **caractérisé en ce qu'**il comprend en outre une étape préalable de recherche (74) d'une information d'autorisation de traitement (50) dudit message (21), à partir de l'élément d'identification (23) du terminal destinataire, dans des moyens (36) de stockage d'informations, ladite information d'autorisation (50) définissant si le terminal destinataire (10) est abonné au procédé de traitement selon la revendication 1.

3. Procédé de traitement d'un message multimédia selon l'une quelconque des revendications précédentes, **caractérisé en ce que** le procédé comprend en outre les étapes suivantes :
- extraction (81) à partir dudit objet audio ou vidéo (24), d'une séquence (27) représentative de l'objet de type audio ou vidéo (24) ; et
- insertion (90) de ladite séquence (27) dans le message multimédia (26) de substitution constitué.

4. Procédé de traitement d'un message multimédia selon l'une quelconque des revendications précédentes, **caractérisé en ce que** l'étape de stockage (86) de l'objet audio ou vidéo (24) est précédée par une étape de traitement de l'objet comprenant les étapes suivantes :
- recherche (78) d'informations (54) définissant les caractéristiques techniques du terminal destinataire (10) dans les moyens (36) de stockage d'informations; et
- modification (80) dudit objet audio ou vidéo (24) pour adapter sa forme aux caractéristiques techniques du terminal destinataire (10).

5. Procédé de traitement d'un message multimédia selon l'une quelconque des revendications précédentes, **caractérisé en ce qu'**il comprend en outre les étapes préalables suivantes :
- recherche (72) dans le message multimédia (21) de chaque objet (24) de type audio ou vidéo ; et
- envoi (92) du message multimédia (21) au terminal destinataire (10) en l'absence d'objet de type audio ou vidéo dans le message multimédia.

6. Procédé de traitement d'un message multimédia selon l'une quelconque des revendications précédentes, le message multimédia (21) comprenant en outre un code de description (22) de son contenu (21), **caractérisé en ce qu'**il comprend les étapes suivantes :
- génération (91) d'un code de description (30) du contenu du message multimédia de substitution (26) ; et
- remplacement (91) du code de description (22) du message multimédia (21) par le code de description (30) du message multimédia de substitution.

7. Système de traitement d'un message multimédia, ledit message étant apte à être envoyé par un terminal (2) de télécommunication d'un correspondant à un terminal (10) de télécommunication d'un destinataire, ledit message multimédia (21) comprenant au moins un élément d'identification (23) du terminal destinataire (10) et au moins un objet de type audio ou vidéo, **caractérisé en ce que** le système de traitement comprend :
- des moyens d'insertion / extraction (38) aptes à extraire chaque objet audio ou vidéo (24) dudit message multimédia (21) ;
- des moyens de substitution (58, 60) d'une adresse de localisation (29) du lieu de stockage de l'objet audio ou vidéo (24) à chaque objet audio ou vidéo (24), les moyens de substitution comprenant :
- des moyens (58) de stockage d'objets multimédias aptes à stocker chaque objet audio ou vidéo ; et
- des moyens (60) de création d'une adresse de localisation (29) du lieu de stockage de chaque objet audio ou vidéo dans les moyens de stockage (58) ;
- lesdits moyens d'insertion / d'extraction (38) étant aptes à insérer ladite adresse de localisation (29) dans le message multimédia (21) en remplacement dudit objet audio ou vidéo (24) pour générer un message de substitution (26).

8. Système de traitement d'un message multimédia selon la revendication 7, **caractérisé en ce que** les moyens de substitution (58, 60) sont implantés dans un serveur de lecture en transit (8) et **en ce que** les moyens d'insertion / d'extraction (38) sont implantés dans un serveur applicatif (6) de traitement.

9. Système de traitement d'un message multimédia selon la revendication 7, **caractérisé en ce que** les moyens d'insertion / extraction (38) et les moyens de substitution (58, 60) sont implantés dans un serveur applicatif de traitement (6).

10. Support d'enregistrement comprenant un programme d'ordinateur comportant des instructions pour l'exécution des étapes du procédé de traitement d'un message multimédia selon l'une quelconque des revendications 1 à 6, lorsque le programme est exécuté sur un ordinateur.
